# FASCICULE DE BREVET EUROPEEN

(11) **EP 3 878 322 B1**
(45) Date de publication et mention de la délivrance du brevet: **20.11.2024**
(21) Numéro de dépôt: 21160502.7
(22) Date de dépôt: 03.03.2021
(51) Int. Cl.: A47J 31/42

(54) **MACHINE À CAFÉ MUNIE D'UN DISPOSITIF D'INSERTION D'UNE DOSE DE MOUTURE**
KAFFEEMASCHINE MIT EINSATZVORRICHTUNG FÜR GEMAHLENEN KAFFEE
COFFEE MACHINE COMPRISING AN INSERTION DEVICE FOR GROUND MATERIAL

(30) Priorité: 12.03.2020 FR 2002467
(43) Date de publication de la demande: 15.09.2021
(73) Titulaire: SEB S.A., 69130 Ecully (FR)
(72) Inventeur: MAUNOURY, Damien, 53470 CHALONS DU MAINE (FR); BICHET, Fabrice, 53100 MAYENNE (FR); DUTERTRE, Thierry, 61000 SAINT-GERMAIN-DU-CORBEIS (FR)
(74) Mandataire: SEB Développement

(56) Documents cités:
- EP-A2- 2 364 624
- WO-A1-2018/169126
- DE-A1- 102016 112 092
- DE-U1- 20 300 928

## Description

La présente invention se rapporte au domaine technique général des machines à café automatiques comportant une chambre d'infusion alimentée en mouture de café pour préparer une boisson, plus particulièrement une machine à café automatique comportant un dispositif d'insertion d'une dose de mouture.

Il est connu du document EP2820982 une machine à café automatique comportant un bâti muni d'au moins une paroi latérale, et une chambre d'infusion munie d'une ouverture supérieure destinée à recevoir de la mouture de café d'un broyeur à grains ou d'un dispositif d'insertion d'une dose de mouture, ledit dispositif d'insertion étant agencé sur l'au moins une paroi latérale et comportant un réservoir doseur, mobile en rotation autour d'un axe R entre une position de chargement dans laquelle une dose de mouture peut être déposée dans ledit réservoir et une position de déchargement dans laquelle la dose de mouture est transférée par gravité vers la chambre d'infusion. D'autres dispositifs de ce type sont connus de WO2018169126 et DE20300928.

Cependant, le mode opératoire pour insérer une dose de mouture dans la chambre d'infusion est compliqué. En effet, l'utilisateur doit extraire le réservoir doseur en translation le long de l'axe de rotation R, s'assurer qu'une ouverture du réservoir doseur est bien orientée vers le haut pour y verser une dose de mouture puis insérer le réservoir doseur sans le faire tourner dans le bâti et ensuite tourner le réservoir doseur pour transférer la mouture.

De plus, si l'utilisateur ne tourne pas complètement le réservoir doseur à la fin du cycle, de la mouture peut rester dans le réservoir doseur et ne pas être transférée dans la chambre d'infusion.

Le but de la présente invention est de remédier aux inconvénients précités et de proposer une machine à café automatique qui présente une mise en oeuvre simple et ergonomique.

Un autre but de la présente invention est de proposer une machine à café automatique qui présente une conception simple et qui soit économique à mettre en oeuvre.

Ces buts sont atteints avec une machine à café automatique comportant les caractéristiques de la revendication 1.

Par une chambre d'infusion munie d'une ouverture supérieure destinée à recevoir de la mouture de café d'un broyeur à grains ou d'un dispositif d'insertion d'une dose de mouture, on comprend que la machine à café automatique comporte le broyeur à grains et le dispositif d'insertion de mouture.

Le dispositif d'insertion de mouture permet à un utilisateur d'insérer une dose de mouture issue de grains de café différents des grains de café présents dans le broyeur à grains. On comprend que la dose de mouture est déposée manuellement dans le dispositif d'insertion.

On comprend que l'axe Δ peut être légèrement décalé de la paroi latérale ou intégré dans un plan d'extension de la paroi latérale.

Par l'axe Δ est parallèle à l'au moins une paroi latérale, on comprend que l'axe Δ est parallèle à un plan dans lequel s'étend l'au moins une paroi latérale.

On comprend que la paroi latérale est une paroi latérale accessible par l'utilisateur. De préférence, la paroi latérale sur laquelle est agencé le dispositif d'insertion d'une dose de mouture est verticale.

Ainsi, le réservoir doseur n'est manoeuvré par l'utilisateur entre la position de chargement et la position de déchargement et réciproquement que par un mouvement simple : une rotation.

De manière avantageuse, le bâti comporte une base destinée à reposer sur un plan de travail et l'axe Δ est parallèle à la base.

Avantageusement, le réservoir doseur comporte des première et deuxième parois de fond qui se rejoignent à proximité de l'axe Δ pour former une ligne L.

De manière avantageuse, la ligne L est agencée au-dessus de l'axe Δ dans la position de déchargement.

Les première et deuxième parois de fond prennent une forme de V qui présente une ouverture supérieure. Dans la position de chargement, l'ouverture supérieure est partiellement située du côté externe de la paroi latérale pour permettre le chargement de la dose de mouture.

De préférence, les première et deuxième parois de fond forment un angle supérieur à 90° dans un plan de coupe perpendiculaire à l'axe Δ.

On comprend que les première et deuxième parois sont planes et forment chacune une ligne dans un plan de coupe perpendiculaire à l'axe Δ.

Avantageusement, la première paroi de fond est alignée avec une paroi inclinée d'une goulotte de transfert de la mouture vers la chambre d'infusion, dans la position de déchargement.

De manière avantageuse, le réservoir doseur comporte une plaque d'habillage qui s'étend dans un plan parallèle ou confondu avec un plan d'extension de la paroi verticale lorsque le réservoir doseur est dans la position de déchargement.

Ainsi, la position de déchargement est très facile à identifier par l'utilisateur : la plaque d'habillage est alignée avec la paroi verticale.

De préférence, le réservoir doseur comporte deux parois latérales qui présentent des bordures arrondies.

De manière avantageuse, l'au moins une paroi latérale du bâti comporte une paroi courbe agencée au-dessus du réservoir doseur, à proximité des bordures arrondies des parois latérales du réservoir doseur lorsque ce dernier occupe la position de déchargement.

Ainsi, la paroi courbe interdit l'accès à l'utilisateur vers l'intérieur du bâti en position de chargement. De plus, la paroi courbe dirige la dose de mouture vers le bas, vers la chambre d'infusion dans la position de déchargement Avantageusement, la paroi courbe comporte un enfoncement qui pénètre dans le réservoir doseur à proximité des parois latérales du réservoir doseur et qui coopère avec une extrémité libre de la première paroi de fond, dans la position de déchargement.

Ainsi, les première et deuxième parois de fond et les deux parois latérales définissent un volume du réservoir doseur, dans la position de chargement, qui permet de dimensionner une dose de mouture. L'enfoncement de la paroi courbe participe également au dimensionnement d'une dose de mouture, dans la position de chargement.

Avantageusement, le réservoir doseur est mobile autour de l'axe Δ entre la position de chargement et la position de déchargement sur une course d'au moins 30°, de préférence d'au moins 45°.

Une telle disposition permet d'obtenir une course faible pour passer de la position de chargement à la position de déchargement.

De préférence, la machine à café automatique comporte un système de maintien du réservoir doseur dans la position de déchargement.

Avantageusement, le système de maintien du réservoir doseur dans la position de déchargement comporte au moins un bossage qui coopère avec au moins un logement agencé sur au moins une languette souple, l'au moins un bossage et l'au moins un logement étant respectivement agencés sur le réservoir doseur et sur le bâti ou inversement.

Ainsi, l'utilisateur fait passer le réservoir doseur de la position de chargement à la position de déchargement uniquement en faisant pivoter le réservoir doseur, le transfert de la mouture et le maintien en position de déchargement étant automatique.

De préférence, la machine à café automatique comporte un circuit de commande et un dispositif de détection de la position de chargement et/ou de déchargement du réservoir doseur.

Ainsi, la machine à café automatique peut gérer la sécurité de l'utilisateur et/ou du résultat, par exemple ne pas autoriser le chargement d'une dose de mouture si une dose est déjà présente dans la chambre d'infusion.

Avantageusement, le dispositif de détection comporte un interrupteur magnétique du type « ILS » et un aimant.

L'invention sera mieux comprise à l'étude du mode de réalisation pris à titre nullement limitatif et illustré dans les figures annexées dans lesquelles :
[Fig. 1] La figure 1 illustre une vue en perspective d'une machine à café automatique munie d'un dispositif d'insertion d'une dose de mouture en position de déchargement selon un mode particulier de réalisation de l'invention.
[Fig. 2] La figure 2 illustre une vue en perspective de la machine à café automatique illustrée sur la figure 1, le dispositif d'insertion d'une dose de mouture étant en position de chargement.
[Fig. 3] La figure 3 illustre une vue en coupe selon la ligne III-III de la machine à café automatique illustrée sur la figure 1.
[Fig. 4] La figure 4 illustre une vue en coupe selon la ligne IV-IV de la machine à café automatique illustrée sur la figure 2.
[Fig. 5] La figure 5 illustre une vue du dessus selon une direction V, en perspective écorchée, de la machine à café automatique illustrée sur la figure 1.
[Fig. 6] La figure 6 illustre une vue en perspective écorchée selon une direction VI du dispositif d'insertion d'une dose de mouture de la machine à café automatique illustrée sur la figure 5, sans la paroi courbe, le dispositif d'insertion d'une dose de mouture étant en position de chargement.
[Fig. 7] La figure 7 illustre une vue en perspective selon une direction VII de la paroi courbe extraite de la machine à café automatique illustrée sur la figure 6.

On notera que, dans ce document, les termes «horizontal», «vertical», «inférieur», «supérieur», «longitudinal», «transversal», «haut», «bas», employés pour décrire la machine à café automatique font référence à cette machine reposant sur un plan de travail, en situation d'usage.

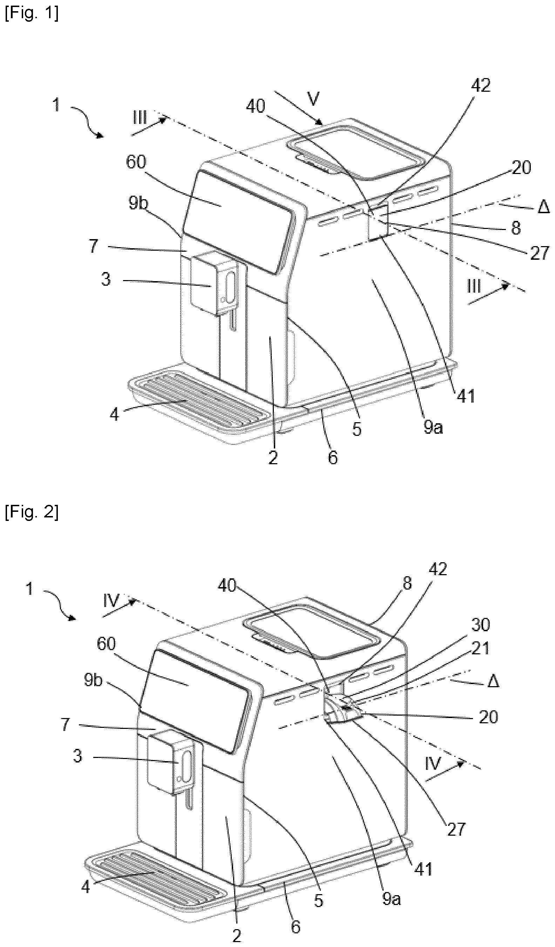

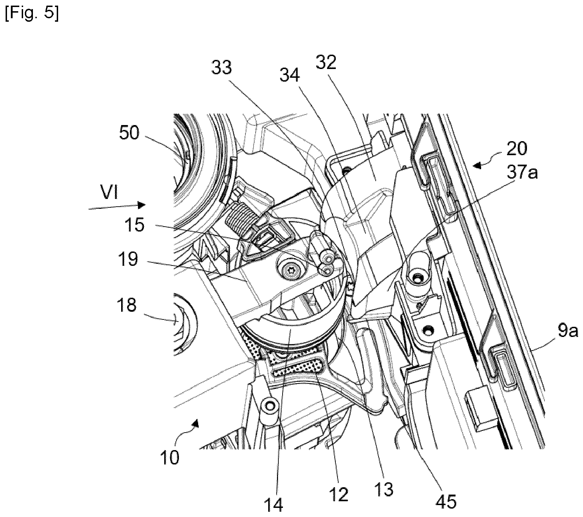

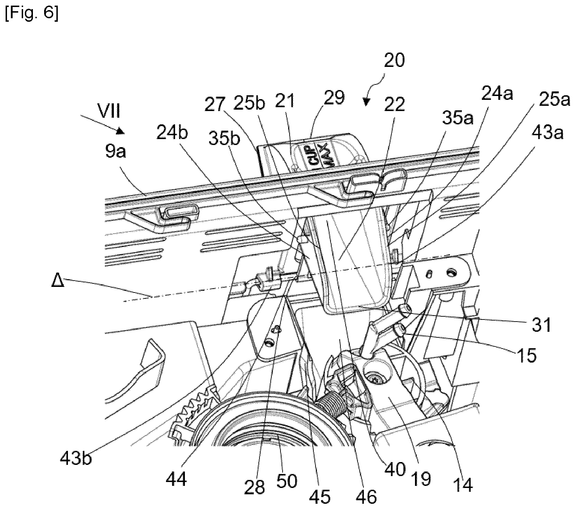

Dans l'exemple de réalisation représenté aux figures 1 à 7, une machine à café automatique 1 comporte un réservoir 2 formant une alimentation en eau froide, un dispositif d'infusion 10 muni d'une chambre d'infusion 12 alimentée en mouture de café par un broyeur à grains 50 (Fig.5, 6) ou d'un dispositif d'insertion 20 d'une dose de mouture. La machine à café automatique 1 comporte également une tête de distribution 3 du café.

Le dispositif d'infusion 10 comprend un corps 11 s'étendant longitudinalement selon un axe vertical et renfermant la chambre d'infusion 12 munie d'une ouverture supérieure 13. La chambre d'infusion 12 est susceptible de recevoir un piston presseur 14 monté déplaçable selon un axe vertical au moyen d'un mécanisme d'entraînement. Le dispositif d'infusion 10 comporte également une pompe électrique (non illustrée sur les figures), destinée à créer une circulation d'eau et d'infusion, ainsi qu'une chaudière 16 destinée à chauffer l'eau pour la préparation du café dans la chambre d'infusion 12. Le corps 11 est agencé latéralement à un vérin hydraulique 17 à simple effet comportant une tige supérieure 18 (Fig. 5) portant un bras 19 formant potence et dont l'extrémité libre est reliée au piston presseur 14, les courses du piston presseur 14 et du vérin hydraulique 17 étant ainsi effectuées selon des directions parallèles. Le piston presseur 14 parcourt une course entre une position haute de retrait pour laquelle il est situé au-dessus de la chambre d'infusion 12 et une position basse de tassage pour laquelle il pénètre dans la chambre d'infusion 12 par l'ouverture supérieure 13. Dans la position basse de tassage, le piston presseur 14 comprime la mouture de café admise dans la chambre d'infusion 12 pour former une galette de mouture comprimée.

La chaudière 16 et le corps 11 sont formés en une seule pièce de matériau conducteur de la chaleur qui contient une résistance électrique chauffante ; des canaux de passage et de chauffage de l'eau dont des entrées sont reliées, via la pompe électrique au réservoir 2 d'eau froide et dont des extrémités débouchent sur le fond de la chambre d'infusion 12. Le piston presseur 14 présente un conduit de passage de l'infusion débouchant par un orifice de sortie 15, tandis que la pompe électrique est adaptée à créer une circulation d'eau ascendante dans la chambre d'infusion 12 vers l'orifice de sortie 15 lorsque le piston presseur 14 ferme la chambre d'infusion 12. Un tel dispositif d'infusion 10 a, par exemple, été décrit plus en détail dans la demande de brevet PCTWO99/12456.

L'orifice de sortie 15 du conduit de passage de l'infusion du piston presseur 14 est relié à un conduit agencé dans la tête de distribution 3 par un tuyau souple (non représenté sur les figures). Le conduit agencé dans la tête de distribution 3 se divise en deux pour former deux sorties de café. La tête de distribution 3 est agencée au-dessus d'un repose tasse 4 et elle est montée mobile en translation verticale pour permettre à un utilisateur d'ajuster la position des sorties de café à la hauteur de la tasse.

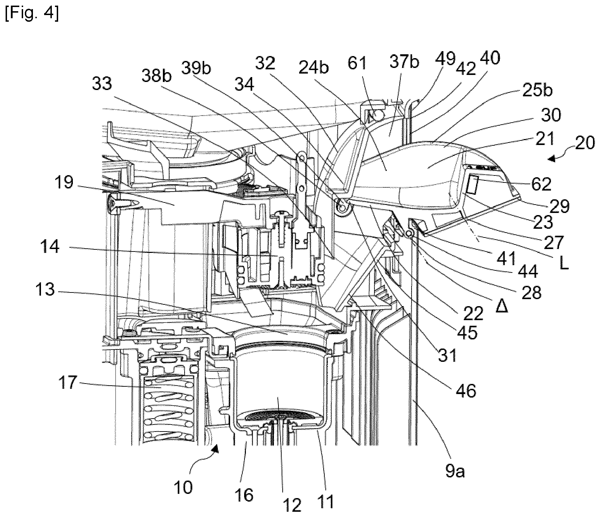

Tel que visible sur les figures 1 et 2, la machine à café automatique 1 comporte un bâti 5 muni d'une base 6 destinée à reposer sur un plan de travail et depuis laquelle s'étendent une paroi avant 7, une paroi arrière 8 et deux parois latérales 9a, 9b. Le dispositif d'insertion 20 d'une dose de mouture est agencé sur la paroi latérale 9a qui comporte une ouverture 40. Le dispositif d'insertion 20 d'une dose de mouture comporte un réservoir doseur 21 qui est mobile en rotation autour d'un axe Δ entre une position de chargement (Fig.4) dans laquelle une dose de mouture peut être déposée dans le réservoir doseur 21 et une position de déchargement (Fig.5) dans laquelle la dose de mouture est transférée par gravité vers la chambre d'infusion 12. L'axe Δ est parallèle à la paroi latérale 9a, notamment parallèle à un bord inférieur 41 de l'ouverture 40 ménagée dans la paroi latérale 9a. L'axe Δ est parallèle à un plan horizontal passant par la base 6.

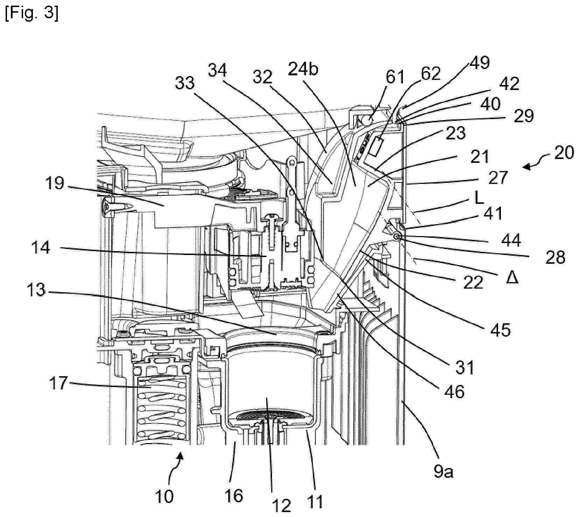

Le réservoir doseur 21 comporte des première 22 et deuxième 23 parois de fond qui se rejoignent, à proximité de l'axe Δ, pour former une ligne L (Fig.3 et 4), parallèle à l'axe Δ. Les première 22 et deuxième 23 parois de fond sont sensiblement planes. Le réservoir doseur 21 comporte deux parois latérales 24a, 24b qui présentent chacune une bordure arrondie 25a, 25b d'extrémité. Les première 22 et deuxième 23 parois de fond forment un angle égal à 100°, dans un plan de coupe perpendiculaire à l'axe Δ.

Tel que visible aux figures 3, 4 et 6, le réservoir doseur 21 comporte un logement cylindrique 28 qui s'étend le long de l'axe Δ et la paroi latérale 9a comporte deux paliers 43a, 43b (fig.6) agencé le long de l'axe Δ, de part et d'autre de l'ouverture 40, au niveau du bord inférieur 41. Un axe 44 est agencé dans les paliers 43 et le logement cylindrique 28 pour permettre la rotation du réservoir doseur 21. Le réservoir doseur 21 comporte une plaque d'habillage 27 qui, dans la position de déchargement, est alignée avec la paroi verticale 9a et ferme l'ouverture 40. La plaque d'habillage 27 comporte une extrémité libre 29 supérieure qui vient à proximité d'une bordure supérieure 42 de l'ouverture 40. Un dégagement 49 (Fig.3, 4) est aménagé dans la paroi latérale 9a pour permettre à un doigt de l'utilisateur de prendre appui sur l'extrémité libre 29 pour faire passer le réservoir doseur 21 de la position de déchargement à la position de chargement. Dans la position de déchargement, la première paroi de fond 22 est alignée avec une paroi inclinée 46 (Fig.6) d'une goulotte de transfert 45 de la mouture vers la chambre d'infusion 12. La paroi inclinée 46 de la goulotte de transfert 45 forme un angle de 40° avec un axe vertical.

Conformément aux figures 3, 4, 5 et 7, la paroi latérale 9a comporte une paroi courbe 32 agencée au-dessus du réservoir doseur 21. La paroi courbe 32 est agencée à proximité des bordures arrondies 25a, 25b des parois latérales 24a, 24b du réservoir doseur 21, notamment dans la position de déchargement. La paroi courbe 32 s'étend depuis la bordure supérieure 42 de l'ouverture 40, vers le bas jusqu'à une extrémité libre 33. L'extrémité libre 33 est agencée à proximité du piston presseur 14 (Fig.3 et 4) lorsqu'il occupe la position haute de retrait pour laquelle il est situé au-dessus de la chambre d'infusion 12. La paroi courbe 32 comporte deux parois latérales 37a, 37b qui sont agencées de part et d'autre des deux parois latérales 24a, 24b du réservoir doseur 21. La paroi courbe 32 comporte un enfoncement 34. Dans la position de déchargement, l'enfoncement 34 pénètre dans le réservoir doseur 21, à proximité des parois latérales 24a, 24b et coopère avec une extrémité libre 31 de la première paroi de fond 22. Ainsi, la paroi courbe 32 munie de l'enfoncement 34 interdit l'accès à l'utilisateur vers l'intérieur du bâti 5. Dans la position de chargement, les première 22 et deuxième 23 parois de fond et les deux parois latérales 24a, 24b ainsi que la paroi courbe 32 munie de l'enfoncement 34 définissent un volume du réservoir doseur 21 qui permet de recevoir une dose de mouture.

La paroi courbe 32 est agencée au-dessus de la goulotte de transfert 45. Dans la position de déchargement, la paroi courbe 32 dirige la dose de mouture vers le bas, vers la goulotte de transfert 45, vers l'ouverture supérieure 13 de la chambre d'infusion 12.

Le réservoir doseur 21 est mobile autour de l'axe Δ entre la position de chargement et la position de déchargement sur une course angulaire de 70°. Ainsi, dans la position de chargement, la deuxième paroi de fond 23, les deux parois latérales 24a, 24b et la bordure supérieure 42 de l'ouverture 40 définissent un orifice 30 (fig. 4) de chargement de la dose de mouture. La machine à café automatique 1 comporte une cuillère doseuse (non représentée sur les figures) qui permet de sélectionner une dose de mouture et de la transférer dans le réservoir doseur 21 par l'orifice 30.

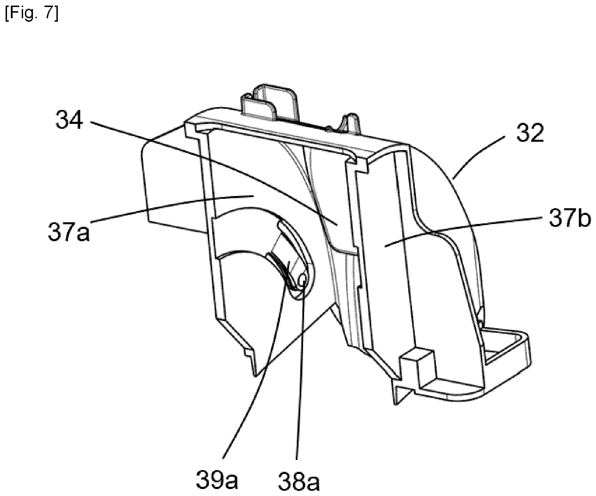

Conformément aux figures 4, 6 et 7, la machine à café automatique 1 comporte un système de maintien du réservoir doseur 21 dans la position de déchargement. Le système de maintien comporte deux bossages 35a, 35b (Fig. 6) agencés respectivement sur les parois latérales 24a, 24b du réservoir doseur 21. Les bossages 35a, 35b coopèrent respectivement avec des logements 38a, 38b (Fig. 4 et 7) agencés sur les parois latérales 37a, 37b de la paroi courbe 32. Les logements 38a, 38b sont agencés sur des languettes souples 39a, 39b. Dans la position de chargement, les bossages 35a, 35b sont en appui contre la paroi latérale 9a pour former une butée (fig. 6).

La machine à café automatique 1 comporte un circuit de commande 60 (Fig. 1 et 2) pour la commande et la gestion des cycles de préparation des boissons infusées, notamment du café. Le circuit de commande 60 comporte un dispositif de détection 61, 62 (Fig. 3 et 4) de la position de chargement et/ou de déchargement du réservoir doseur 31. Le dispositif de détection 61, 62 comporte un interrupteur magnétique 61 du type « ILS » et un aimant 62.

En fonctionnement, l'utilisateur qui souhaite insérer une dose de mouture issue de grains de café différents des grains de café présents dans le broyeur bascule le réservoir doseur 21 autour de l'axe Δ de la position de déchargement vers la position de chargement. Il remplit le réservoir doseur 21 par l'orifice 30 avec une dose de mouture à l'aide de la cuillère doseuse. Il repousse ensuite la plaque d'habillage 27 le long de la paroi latérale 9a pour amener le réservoir doseur 21 en position de déchargement. La première paroi de fond 22 se trouve alignée avec la paroi inclinée 46 de la goulotte de transfert 45. Ainsi, la dose de mouture glisse le long de la première paroi de fond 22 et le long la paroi inclinée 46 pour arriver dans la chambre d'infusion 12. Le circuit de commande 60 détecte à l'aide du dispositif de détection 61, 62 que le réservoir doseur 21 est dans la position de déchargement et que la dose de mouture a bien été transférée dans la chambre d'infusion 12. L'utilisateur peut alors lancer la réalisation d'un café. Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, pour autant qu'ils ne sortent pas du domaine de protection de l'invention telle que définie par les revendications annexées.

Dans une variante de réalisation, le réservoir doseur comporte une échelle graduée destinée à assister l'utilisateur pour dimensionner la dose de mouture.

## Revendications

1. Machine à café automatique (1) comportant un broyeur à grains (50), un dispositif d'insertion (20) d'une dose de mouture, un bâti (5) muni d'au moins une paroi latérale (9a) et une chambre d'infusion (12) munie d'une ouverture supérieure (13) destinée à recevoir de la mouture de café du broyeur à grains (50) ou du dispositif d'insertion (20) d'une dose de mouture, ledit dispositif d'insertion (20) étant agencé sur l'au moins une paroi latérale (9a) et comportant un réservoir doseur (21), mobile en rotation autour d'un axe Δ entre une position de chargement dans laquelle une dose de mouture peut être déposée dans ledit réservoir doseur (21) et une position de déchargement dans laquelle la dose de mouture est transférée par gravité vers la chambre d'infusion (12), le dispositif d'insertion (20) étant configuré pour permettre à un utilisateur d'insérer une dose de mouture issue de grains de café différents des grains de café présents dans le broyeur à grains (50), la dose de mouture étant déposée manuellement dans le dispositif d'insertion (20), l'axe Δ étant parallèle à l'au moins une paroi latérale (9a).

2. Machine à café automatique (1) selon la revendication 1, **caractérisée en ce que** le réservoir doseur (21) comporte des première (22) et deuxième (23) parois de fond qui se rejoignent à proximité de l'axe Δ.

3. Machine à café automatique (1) selon la revendication 2, **caractérisée en ce que** les première (22) et deuxième (23) parois de fond forment un angle supérieur à 90° dans un plan de coupe perpendiculaire à l'axe Δ.

4. Machine à café automatique (1) selon l'une quelconque des revendications 2 à 3, **caractérisée en ce que** la première paroi de fond (22) est alignée avec une paroi inclinée (46) d'une goulotte de transfert (45) de la mouture vers la chambre d'infusion (12), dans la position de déchargement.

5. Machine à café automatique (1) selon l'une quelconque des revendications 2 à 4, **caractérisée en ce que** le réservoir doseur (21) comporte deux parois latérales (24a, 24b) qui présentent des bordures arrondies (25a, 25b).

6. Machine à café automatique (1) selon la revendication 5, **caractérisée en ce que** l'au moins une paroi latérale (9a) du bâti comporte une paroi courbe (32) agencée au-dessus du réservoir doseur (21), à proximité des bordures arrondies des parois latérales (24a, 24b) du réservoir doseur lorsque ce dernier occupe la position de déchargement.

7. Machine à café automatique (1) selon la revendication 6, **caractérisée en ce que** la paroi courbe (32) comporte un enfoncement qui pénètre dans le réservoir doseur (21) à proximité des parois latérales (24a, 24b) du réservoir doseur et qui coopère avec une extrémité libre (31) de la première paroi de fond (22), dans la position de déchargement.

8. Machine à café automatique (1) selon l'une quelconque des revendications 1 à 7, **caractérisée en ce que** le réservoir doseur (21) est mobile autour de l'axe Δ entre la position de chargement et la position de déchargement sur une course angulaire d'au moins 30°, de préférence d'au moins 45°.

9. Machine à café automatique (1) selon l'une quelconque des revendications 1 à 8, **caractérisée en ce qu'**elle comporte un système de maintien (35a, 35b, 38a, 38b) du réservoir doseur (21) dans la position de déchargement

10. Machine à café automatique (1) selon la revendication 9, **caractérisée en ce que** le système de maintien du réservoir doseur dans la position de déchargement comporte au moins un bossage (35a, 35b) qui coopère avec au moins un logement (38a, 38b) agencé sur au moins une languette souple (39a, 39b), l'au moins un bossage (35a, 35b) et l'au moins un logement (38a, 38b) étant respectivement agencés sur le réservoir doseur (21) et sur le bâti (5) ou inversement.

11. Machine à café automatique (1) selon l'une quelconque des revendications 1 à 10, **caractérisée en ce qu'**elle comporte un circuit de commande (60) et un dispositif de détection (61, 62) de la position de chargement et/ou de déchargement du réservoir doseur (21).

12. Machine à café automatique (1) selon la revendication 11, **caractérisée en ce que** le dispositif de détection (61, 62) comporte un interrupteur magnétique (61) du type « ILS » et un aimant (62).

## Patentansprüche

1. Automatische Kaffeemaschine (1), umfassend eine Bohnenmühle (50), eine Einsatzvorrichtung (20) einer Dosis an gemahlenem Kaffee, einen Aufsatz (5), der mit mindestens einer Seitenwand (9a) ausgestattet ist, und eine Infusionskammer (12), die mit einer oberen Öffnung (13) ausgestattet ist, die dazu vorgesehen ist, gemahlenen Kaffee von der Bohnenmühle (50) oder der Einsatzvorrichtung (20) einer Dosis an gemahlenem Kaffee aufzunehmen, wobei die Einsatzvorrichtung (20) auf der mindestens einen Seitenwand (9a) angeordnet ist und einen Dosierbehälter (21) umfasst, der drehbeweglich ist um eine Achse Δ zwischen einer Ladeposition, bei der eine Dosis an gemahlenem Kaffee in den Dosierbehälter (21) eingebracht werden kann, und einer Entladeposition, bei der die Dosis an gemahlenem Kaffee durch Schwerkraft in die Infusionskammer (12) überführt wird, wobei die Einsatzvorrichtung (20) konfiguriert ist, um einem Benutzer zu ermöglichen, eine Dosis an gemahlenem Kaffee aus Kaffeebohnen einzusetzen, die sich von den in der Bohnenmühle (50) vorhandenen Kaffeebohnen unterscheiden, wobei die Dosis an gemahlenem Kaffee in die Einsatzvorrichtung (20) manuell eingebracht wird, wobei die Achse Δ parallel zur mindestens einen Seitenwand (9a) ist.

2. Automatische Kaffeemaschine (1) nach Anspruch 1, **dadurch gekennzeichnet, dass** der Dosierbehälter (21) eine erste (22) und eine zweite (23) Bodenwand umfasst, die in der Nähe der Achse Δ zusammenkommen.

3. Automatische Kaffeemaschine (1) nach Anspruch 2, **dadurch gekennzeichnet, dass** die erste (22) und die zweite (23) Bodenwand in einer Schnittebene senkrecht zur Achse Δ einen Winkel größer als 90° bilden.

4. Automatische Kaffeemaschine (1) nach einem der Ansprüche 2 bis 3, **dadurch gekennzeichnet, dass** in der Entladeposition die erste Bodenwand (22) mit einer geneigten Wand (46) einer Übertragungsrinne (45) des gemahlenen Kaffees zur Infusionskammer (12) ausgerichtet ist.

5. Automatische Kaffeemaschine (1) nach einem der Ansprüche 2 bis 4, **dadurch gekennzeichnet, dass** der Dosierbehälter (21) zwei Seitenwände (24a, 24b) umfasst, die gerundete Ränder (25a, 25b) aufweisen.

6. Automatische Kaffeemaschine (1) nach Anspruch 5, **dadurch gekennzeichnet, dass** die mindestens eine Seitenwand (9a) des Aufsatzes eine gekrümmte Wand (32) umfasst, die über dem Dosierbehälter (21) in der Nähe der gerundeten Ränder der Seitenwände (24a, 24b) des Dosierbehälters angeordnet ist, wenn dieser Letztere die Entladeposition einnimmt.

7. Automatische Kaffeemaschine (1) nach Anspruch 6, **dadurch gekennzeichnet, dass** die gekrümmte Wand (32) eine Einsenkung umfasst, die in der Nähe der Seitenwände (24a, 24b) des Dosierbehälters (21) eindringt und die in der Entladeposition mit einem freien Ende (31) der ersten Bodenwand (22) zusammenwirkt.

8. Automatische Kaffeemaschine (1) nach einem der Ansprüche 1 bis 7, **dadurch gekennzeichnet, dass** der Dosierbehälter (21) um die Achse Δ zwischen der Ladeposition und der Entladeposition auf einer winkligen Bahn von mindestens 30°, vorzugsweise von mindestens 45° beweglich ist.

9. Automatische Kaffeemaschine (1) nach einem der Ansprüche 1 bis 8, **dadurch gekennzeichnet, dass** sie ein Wartungssystem (35a, 35b, 38a, 38b) des Dosierbehälters (21) in der Entladeposition umfasst.

10. Automatische Kaffeemaschine (1) nach Anspruch 9, **dadurch gekennzeichnet, dass** das Wartungssystem des Dosierbehälters in der Entladeposition mindestens einen Vorsprung (35a, 35b) umfasst, der mit mindestens einem Sitz (38a, 38b) zusammenwirkt, der auf mindestens einer nachgiebigen Lasche (39a, 39b) angeordnet ist, wobei der mindestens eine Vorsprung (35a, 35b) und der mindestens eine Sitz (38a, 38b) auf dem Dosierbehälter (21) bzw. auf dem Aufsatz (5) oder umgekehrt angeordnet sind.

11. Automatische Kaffeemaschine (1) nach einem der Ansprüche 1 bis 10, **dadurch gekennzeichnet, dass** sie einen Regelkreis (60) und eine Erfassungsvorrichtung (61, 62) der Ladeposition und/oder der Entladeposition des Dosierbehälters (21) umfasst.

12. Automatische Kaffeemaschine (1) nach Anspruch 11, **dadurch gekennzeichnet, dass** die Erfassungsvorrichtung (61, 62) einen Magnetschalter (61) vom Typ "Reedschalter" und einen Magneten (62) umfasst.

## Claims

1. Automatic coffee machine (1) comprising a bean grinder (50), a device (20) for inserting a dose of grinds, a frame (5) provided with at least one side wall (9a) and a brewing chamber (12) provided with an upper opening (13) for receiving coffee grinds from the bean grinder (50) or from the device (20) for inserting a dose of grinds, said insertion device (20) being arranged on at least one side wall (9a) and comprising a dosing reservoir (21) which can be rotated about an axis Δ between a loading position in which a dose of grinds can be deposited in said dosing reservoir (21), and an unloading position in which the dose of grinds is transferred by gravity to the brewing chamber (12), the insertion device (20) being configured to enable a user to insert a dose of grinds from coffee beans different from the coffee beans present in the bean grinder (50), the dose of grinds being deposited manually in the insertion device (20), the axis Δ being parallel to the at least one side wall (9a).

2. Automatic coffee machine (1) according to claim 1, **characterised in that** the dosing reservoir (21) comprises first (22) and second (23) base walls which meet close to the axis Δ.

3. Automatic coffee machine (1) according to claim 2, **characterised in that** the first (22) and second (23) base walls form an angle greater than 90° in a cross-sectional plane perpendicular to the axis Δ.

4. Automatic coffee machine (1) according to any of claims 2 to 3, **characterised in that** the first base wall (22) is aligned with an inclined wall (46) of a spout (45) for transferring the grinds to the brewing chamber (12), in the unloading position.

5. Automatic coffee machine (1) according to any of claims 2 to 4, **characterised in that** the dosing reservoir (21) comprises two side walls (24a, 24b) which have rounded edges (25a, 25b).

6. Automatic coffee machine (1) according to claim 5, **characterised in that** the at least one side wall (9a) of the frame comprises a curved wall (32) arranged above the dosing container (21), close to the rounded edges of the side walls (24a, 24b) of the dosing reservoir when the latter is in the unloading position.

7. Automatic coffee machine (1) according to claim 6, **characterised in that** the curved wall (32) comprises a depression which penetrates into the dosing reservoir (21) close to the side walls (24a, 24b) of the dosing reservoir and which cooperates with a free end (31) of the first base wall (22), in the unloading position.

8. Automatic coffee machine (1) according to any of claims 1 to 7, **characterised in that** the dosing reservoir (21) is movable about the axis Δ between the loading position and the unloading position over an angular travel of at least 30°, preferably at least 45°.

9. Automatic coffee machine (1) according to any of claims 1 to 8, **characterised in that** it comprises a system (35a, 35b, 38a, 38b) for holding the dosing reservoir (21) in the unloading position.

10. Automatic coffee machine (1) according to claim 9, **characterised in that** the system for holding the dosing reservoir in the unloading position comprises at least one boss (35a, 35b) which cooperates with at least one housing (38a, 38b) arranged on at least one flexible tongue (39a, 39b), the at least one boss (35a, 35b) and the at least one housing (38a, 38b) being arranged on the dosing reservoir (21) and on the frame (5), respectively, or vice versa.

11. Automatic coffee machine (1) according to any of claims 1 to 10, **characterised in that** it comprises a control circuit (60) and a device (61, 62) for detecting the loading and/or unloading position of the dosing reservoir (21).

12. Automatic coffee machine (1) according to claim 11, **characterised in that** the detection device (61, 62) comprises a magnetic switch (61) of the "ILS" type and a magnet (62).
